# EUROPEAN PATENT APPLICATION

(11) **EP 4 096 166 A1**
(43) Date of publication of application: **30.11.2022**
(21) Application number: 20921539.1
(22) Date of filing: 30.09.2020
(51) Int. Cl.: H04L 12/26

(54) **NETWORK DEVICE, DATA PROCESSING METHOD, APPARATUS AND SYSTEM, AND READABLE STORAGE MEDIUM**

(30) Priority: 29.02.2020 CN 202010132778
(71) Applicant: Huawei Technologies Co., Ltd., Shenzhen, Guangdong 518129 (CN)
(72) Inventor: CHENG, Jian, Shenzhen, Guangdong 518129 (CN); ZHANG, Liang, Shenzhen, Guangdong 518129 (CN); XU, Huiying, Shenzhen, Guangdong 518129 (CN); XUE, Li, Shenzhen, Guangdong 518129 (CN)
(74) Representative: Maiwald GmbH
(86) International application number: PCT/CN2020/119348
(87) International publication number: WO 2021/169304

(57) **Abstract**

This application discloses a network device, a data processing method, apparatus, and system, and a readable storage medium, and belongs to the field of computer technologies. The network device includes: a network interface configured to receive target data, a first processor configured to determine feature information of the target data, a second processor configured to perform preprocessing on the feature information, and a third processor configured to perform inference on a preprocessing result. In addition, the second processor is further configured to perform policy analysis based on an inference result. Therefore, in this application, processing such as data collection, feature extraction, preprocessing, inference, and policy analysis may be performed by using an independent network device, so that a large delay caused by data reporting is avoided, and data processing efficiency is improved. In addition, a small quantity of network transmission resources are occupied, so that costs of data processing are low, and data leakage is avoided in a transmission process. Therefore, security and reliability of the data processing are ensured.

## Description

This application claims priority to Chinese Patent Application No. 202010132778.3, filed on February 29, 2020 and entitled "NETWORK DEVICE, DATA PROCESSING METHOD, APPARATUS, AND SYSTEM, AND READABLE STORAGE MEDIUM", which is incorporated herein by reference in its entirety.

### TECHNICAL FIELD

This application relates to the field of computer technologies, and in particular, to a network device, a data processing method, apparatus, and system, and a readable storage medium.

### BACKGROUND

With the development of computer technologies, a requirement of people on data processing is higher, and intelligent processing comes into being. In an intelligent processing process, data usually needs to be analyzed. A data processing manner is determined based on an analysis result, and then data is processed based on the processing manner determined based on the analysis result.

In a related technology, intelligent processing is performed on the data by using a data processing system. The data processing system includes a first device and a second device. The second device includes a collection module, an analysis module, and a decision module. In implementation, the first device first obtains data, and sends the data to the collection module in the second device. The collection module stores the received data. Then, the analysis module in the second device analyzes the stored data to obtain an analysis result. The decision module in the second device determines processing information based on the analysis result, and returns the determined processing information to the first device. Finally, the first device may perform data processing based on the received processing information.

However, the first device needs to send the data to the second device, and a large quantity of network transmission resources and storage resources are occupied in a sending process. Therefore, costs of processing the data by using the data processing system provided in the related technology are high. In addition, a transmission process between the first device and the second device usually has a long delay, and consequently data processing

### SUMMARY

Embodiments of this application provide a network device, a data processing method, apparatus, and system, and a readable storage medium, to resolve a problem provided in a related technology. Technical solutions are as follows:
According to a first aspect, a network device is provided. The network device includes a first processor, a second processor, a third processor, and a network interface. The first processor is separately connected to the network interface and the second processor, and the second processor is further connected to the third processor.

In the network device, the network interface is configured to: receive target data, and transmit the target data to the first processor. Correspondingly, the first processor may be configured to receive the target data sent by the network interface. Then, the first processor may be configured to: determine feature information of target data, and send the feature information to the second processor. The second processor receives the feature information sent by the first processor, and performs preprocessing on the feature information to obtain a preprocessing result. Then, the second processor is configured to send the preprocessing result to the third processor.

The third processor is configured to: receive the preprocessing result sent by the second processor, perform inference on the preprocessing result to obtain an inference result, and send the inference result to the second processor. Finally, the second processor is further configured to receive the inference result sent by the third processor, and perform policy analysis based on the inference result.

In embodiments of this application, processing such as data collection, feature extraction, preprocessing, inference, and policy analysis may be performed by using an independent network device, so that a large delay caused by data reporting is avoided, and data processing efficiency is improved. In addition, a small quantity of network transmission resources are occupied, so that costs of data processing are low, and data leakage is avoided in a transmission process. Therefore, security and reliability of the data processing are ensured.

In an example embodiment, the network device is configured to transmit the target data in a network.

In the example embodiment, the first processor is a network processor, the second processor is a general purpose processor, and the third processor is an artificial intelligence AI processor.

In the example embodiment, the first processor includes a forwarding engine and a measurement engine. The forwarding engine is electrically connected to the measurement engine. The forwarding engine is configured to receive the target data sent by the network interface, and forward the target data to the measurement engine. The measurement engine is configured to receive the target data sent by the forwarding engine, and determine the feature information of the target data. In this embodiment, the feature information of the target data is determined by using a dedicated measurement engine, which has a strong pertinence, so that a speed of determining the feature information is improved, and data processing efficiency is improved.

In the example embodiment, the first processor further includes: a cache, where the cache is electrically connected to the forwarding engine and the measurement engine separately. The cache is configured to cache data generated by the forwarding engine and the measurement engine. In this embodiment, the forwarding engine and the measurement engine may directly access data required for operation from a set cache without accessing a memory. Therefore, time required for access is shortened, and data processing efficiency is improved.

In the example embodiment, the second processor is further configured to obtain running status information of the network device. The second processor is configured to perform preprocessing on the feature information of the target data and the running status information of the network device to obtain a preprocessing result. In this embodiment, the running status information is obtained, so that in addition to the target data received by using the network interface, the network device may further process the running status information. In other words, the network device has a capability of processing a plurality of different types of data, and applicability is high.

In the example embodiment, the network device further includes an input/output IO interface, where the IO interface is electrically connected to the second processor. The IO interface is configured to collect the running status information of the network device and transmit the running status information to the second processor. The second processor is configured to receive the running status information sent by the IO interface. In this embodiment, the running status information is obtained by setting the IO interface, and the obtaining manner is highly feasible.

According to a second aspect, a data processing method is provided, where the method is applied to the network device according to any one of the first aspect, and the method includes: receiving target data; determining feature information of the target data; performing preprocessing on the feature information of the target data to obtain a preprocessing result; performing inference on the preprocessing result to obtain an inference result; and performing policy analysis based on the inference result.

In an example embodiment, the determining feature information of the target data includes: obtaining a hash value corresponding to the target data, reading a mapping table including a plurality of entries; determining, from the plurality of entries included in the mapping table based on the hash value, a target entry corresponding to the target data; and in response to that the target entry is determined, obtaining reference information of the target data, and determining the feature information based on the reference information of the target data and reference information stored in the target entry.

In the example embodiment, the determining feature information of the target data further includes: in response to that the target entry is not determined, adding a new entry corresponding to the target data to the mapping table; and obtaining the reference information of the target data, storing the reference information in the new entry, and determining the feature information based on the reference information.

In the example embodiment, after the determining feature information of the target data, the method further includes: in response to a need to aggregate the feature information, obtaining a rule group, where the rule group includes one or more reference rules; and aggregating the feature information according to the rule group to obtain one or more information groups.

The performing preprocessing on the feature information to obtain a preprocessing result includes: performing preprocessing on the one or more information groups to obtain the preprocessing result.

In the example embodiment, before the performing preprocessing on the feature information of the target data, the method further includes: obtaining running status information of the network device.

The performing preprocessing on the feature information of the target data includes: performing preprocessing on the target data and the running status information of the network device.

In the example embodiment, the determining feature information of the target data includes: determining packet lengths and timestamps of a plurality of data packets in the target data.

The performing preprocessing on the feature information of the target data to obtain a preprocessing result includes: obtaining a packet length sequence of the target data based on the packet lengths and the timestamps of the plurality of data packets, where a plurality of packet lengths in the packet length sequence correspond to one timestamp, and converting the packet length sequence into a matrix.

The performing inference on the preprocessing result to obtain an inference result includes: identifying, based on the matrix, an application type to which the target data belongs.

The performing policy analysis based on the inference result includes: determining a forwarding priority of the target data based on the application type to which the target data belongs.

In the example embodiment, the determining feature information of the target data includes: determining the timestamps of the plurality of data packets in the target data and device identifiers of a plurality of network devices through which the data packets pass in a transmission process.

The performing preprocessing on the feature information of the target data to obtain a preprocessing result includes: calculating, based on the timestamps of the plurality of data packets and the device identifiers of the plurality of network devices through which the data packets pass in the transmission process, time of the data packets pass through the plurality of network devices, and converting the time of the data packets pass through the plurality of network devices into a matrix.

The performing inference on the preprocessing result to obtain an inference result includes: determining transmission congestion statuses of the plurality of network devices based on the matrix.

The performing policy analysis based on the inference result includes: determining a forwarding path of the target data based on the transmission congestion statuses of the plurality of network devices.

In the example embodiment, the determining feature information of the target data includes: determining packet lengths and timestamps of a plurality of data packets in the target data.

The performing preprocessing on the feature information of the target data to obtain a preprocessing result includes: determining, based on the timestamps of the plurality of data packets, one or more data packets received by the network device in unit time, calculating a sum of one or more packet lengths of the data packets received by the network device in the unit time to obtain a throughput, and converting the throughput into a matrix.

The performing inference on the preprocessing result to obtain an inference result includes: determining, based on the matrix, whether traffic of the network device is abnormal, to obtain a traffic monitoring result.

The performing policy analysis based on the inference result includes: determining a forwarding manner of the target data based on the traffic monitoring result.

According to a third aspect, a data processing apparatus is provided, where the apparatus includes:
a receiving module, configured to receive target data;
a determining module, configured to determine feature information of the target data;
a preprocessing module, configured to perform preprocessing on the feature information to obtain a preprocessing result;
an inference module, configured to perform inference on the preprocessing result to obtain an inference result; and
an analysis module, configured to perform policy analysis based on the inference result.

In an example embodiment, the determining module is configured to: obtain a hash value corresponding to the target data, read a mapping table including a plurality of entries; determine, from the plurality of entries included in the mapping table based on the hash value, a target entry corresponding to the target data; and in response to that the target entry is determined, obtain reference information of the target data, and determine the feature information based on the reference information of the target data and reference information stored in the target entry.

In the example embodiment, the determining module is further configured to: in response to that the target entry is not determined, add a new entry corresponding to the target data to the mapping table; and obtain the reference information of the target data, storing the reference information in the new entry, and determine the feature information based on the reference information.

In the example embodiment, the apparatus further includes: an aggregation module, configured to: in response to a need to aggregate the feature information, obtain a rule group, where the rule group includes one or more reference rules; and aggregate the feature information according to the rule group to obtain one or more information groups; and
the preprocessing module, configured to perform preprocessing on the one or more information groups to obtain the preprocessing result.

In the example embodiment, the apparatus further includes: an obtaining module, configured to obtain running status information of the network device; and the preprocessing module is configured to perform preprocessing on the target data and the running status information of the network device.

In the example embodiment, the determining module is configured to determine packet lengths and timestamps of a plurality of data packets in the target data.

The preprocessing module is configured to: obtain a packet length sequence of the target data based on the packet lengths and the timestamps of the plurality of data packets, where a plurality of packet lengths in the packet length sequence correspond to one timestamp, and convert the packet length sequence into a matrix.

The inference module is configured to identify, based on the matrix, an application type to which the target data belongs.

The analysis module is configured to determine a forwarding priority of the target data based on the application type to which the target data belongs.

In the example embodiment, the determining module is configured to determine the timestamps of the plurality of data packets in the target data and device identifiers of a plurality of network devices through which the data packets pass in a transmission process.

The preprocessing module is configured to: calculate, based on the timestamps of the plurality of data packets and the device identifiers of the plurality of network devices through which the data packets pass in the transmission process, time of the data packets pass through the plurality of network devices, and convert the time of the data packets pass through the plurality of network devices into a matrix.

The inference module is configured to determine transmission congestion statuses of the plurality of network devices based on the matrix.

The analysis module is configured to determine a forwarding path of the target data based on the transmission congestion statuses of the plurality of network devices.

In the example embodiment, the determining module is configured to determine packet lengths and timestamps of a plurality of data packets in the target data.

The preprocessing module is configured to: determine, based on the timestamps of the plurality of data packets, one or more data packets received by the network device in unit time, calculating a sum of one or more packet lengths of the data packets received by the network device in the unit time to obtain a throughput, and convert the throughput into a matrix.

The inference module is configured to determine, based on the matrix, whether traffic of the network device is abnormal, to obtain a traffic monitoring result.

The analysis module is configured to determine a forwarding manner of the target data based on the traffic monitoring result.

According to a fourth aspect, a data processing system is provided. The system includes a plurality of network devices according to any one of claims 1 to 5, first processors in the plurality of network devices are connected to each other, second processors in the plurality of network devices are connected to each other, and third processors in the plurality of network devices are connected to each other.

In an example embodiment, different interconnected processors are configured to transmit a synchronization signal, the first processor is configured to determine feature information of target data based on the synchronization signal, the second processor is configured to perform preprocessing on the feature information based on the synchronization signal to obtain a preprocessing result, the third processor is configured to perform inference on the preprocessing result based on the synchronization signal to obtain an inference result, and the second processor is further configured to perform policy analysis based on the synchronization signal and the inference result.

In the example embodiment, there is a topological relationship between different network devices, the topological relationship indicates an upper/lower-level relationship between the different network devices, and different interconnected processors are configured to process a part of data in the target data in sequence based on the upper/lower-level relationship indicated by the topological relationship, and send a processing result to a processor in another upper-level network device, where the processing result is a result obtained through policy analysis.

According to a fifth aspect, a data processing system is provided. The system includes a plurality of the network devices according to any one of claims 1 to 5, and the network devices are connected to each other.

In an example embodiment, each of the plurality of the network devices is configured to: receive target data, and obtain an inference result based on the target data. One of the plurality of network devices is configured to: summarize the inference result obtained by each of the network devices, and perform policy analysis based on a summarized inference result.

According to a sixth aspect, a computer program (product) is provided. The computer program (product) includes computer program code. When the computer program code is run by a computer, the computer is enabled to perform the methods in the foregoing aspects.

According to a seventh aspect, a readable storage medium is provided. The readable storage medium stores a program or instructions. When the program or the instructions is/are run on a computer, the method according to any one of the second aspect is performed.

According to an eighth aspect, a chip is provided, including a processor. The processor is configured to invoke instructions stored in the memory and run the instructions, to enable a communication device on which the chip is installed to perform the method according to any one of the second aspect.

According to a ninth aspect, another chip is provided. The chip includes an input interface, an output interface, a processor, and a memory. The input interface, the output interface, the processor, and the memory are connected to each other through an internal connection path. The processor is configured to execute code in the memory. When the code is executed, the processor is configured to perform the method according to any one of the second aspect.

### BRIEF DESCRIPTION OF DRAWINGS

FIG. 1 is a schematic diagram of a structure of a data processing system in a related technology according to an embodiment of this application;
FIG. 2 is a schematic diagram of a structure of a network device according to an embodiment of this application;
FIG. 3 is a schematic diagram of a structure of a network device according to an embodiment of this application;
FIG. 4 is a schematic diagram of a structure of a first processor according to an embodiment of this application;
FIG. 5 is a schematic diagram of a structure of a network device according to an embodiment of this application;
FIG. 6 is a schematic diagram of a structure of a network device according to an embodiment of this application;
FIG. 7 is a flowchart of a data processing method according to an embodiment of this application;
FIG. 8 is a schematic diagram of a structure of a data processing system according to an embodiment of this application;
FIG. 9 is a schematic diagram of a structure of a data processing system according to an embodiment of this application;
FIG. 10 is a schematic diagram of a structure of a data processing system according to an embodiment of this application; and
FIG. 11 is a schematic diagram of a structure of a data processing apparatus according to an embodiment of this application.

Marks in the accompanying drawings are described as follows:
11-first processor, 12-second processor, 13-third processor, 14-network interface, 15-IO interface.

### DESCRIPTION OF EMBODIMENTS

Terms used in embodiments of this application are only used to explain specific embodiments of this application, but are not intended to limit this application.

With the development of computer technologies, a requirement of people on data processing is higher, and intelligent processing comes into being. In an intelligent processing process, data usually needs to be analyzed. A data processing manner is determined based on an analysis result, and then data is processed based on the processing manner determined based on the analysis result. For example, in a process of forwarding data streams from a plurality of different application programs, each data stream needs to be analyzed to determine an application program type corresponding to each data stream. Then, a forwarding priority of the data stream is determined based on the application type, and the data stream is forwarded based on the forwarding priority, to complete forwarding processing of the data stream.

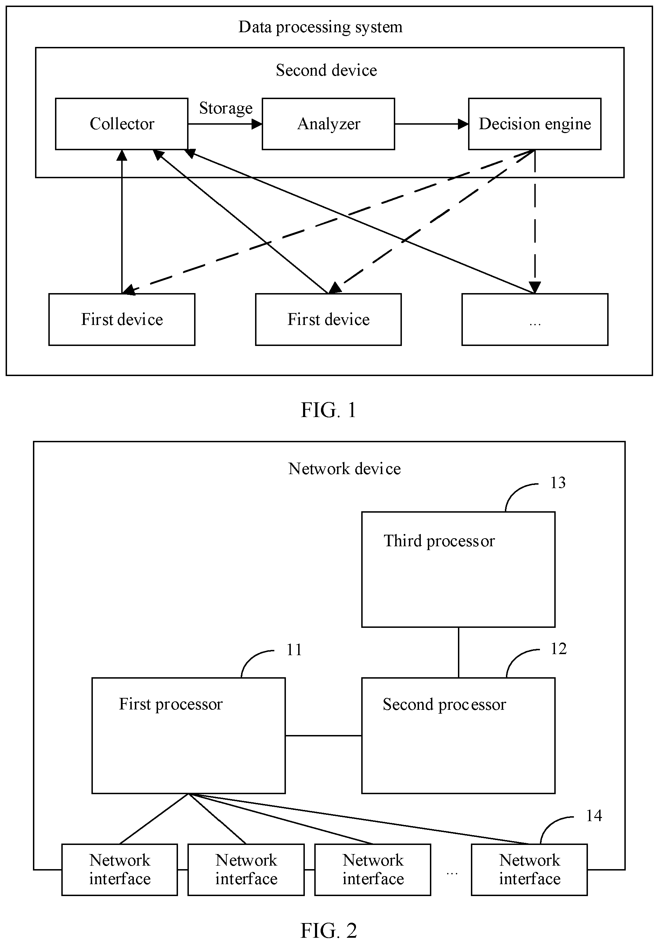

In a related technology, the intelligent processing is performed on the data by using the data processing system shown in FIG. 1. The data processing system includes a first device and a second device. The second device includes a collector, an analyzer, and a decision engine. In implementation, the first device first obtains data, and sends the data to the collecting module in the second device. The collecting module stores the received data. Then, the analysis module in the second device analyzes the stored data to obtain an analysis result. The decision module in the second device determines processing information based on the analysis result, and returns the determined processing information to the first device. Finally, the first device may perform data processing based on the received processing information.

However, the first device needs to send all the data to the second device, and a large quantity of network transmission resources and storage resources are occupied in a sending process. Therefore, costs of processing the data by using the data processing system provided in the related technology are high. In addition, even if security of the sending process is improved by using a process such as key agreement, data may still be leaked in the sending process due to a potential vulnerability, and is not secure and reliable enough. In addition, a transmission process between the first device and the second device usually has a long delay, and consequently data processing efficiency is low.

Refer to FIG. 2, an embodiment of this application provides a network device. The device includes a first processor 11, a second processor 12, a third processor 13, and a network interface 14. The first processor 11 is separately connected to the network interface 14 and the second processor 12, and the second processor 12 is further connected to the third processor 13.

The network interface 14 is configured to receive target data, and transmit the target data to the first processor 11. The first processor 11 is configured to: receive the target data sent by the network interface 14, determine feature information of the target data, and send the feature information to the second processor 12. The second processor 12 is configured to: receive the feature information sent by the first processor 11, perform preprocessing on the feature information to obtain a preprocessing result, and send the preprocessing result to the third processor 13. The third processor 13 is configured to: receive the preprocessing result sent by the second processor 12, perform inference on the preprocessing result to obtain an inference result, and send the inference result to the second processor 12. The second processor 12 is further configured to receive the inference result sent by the third processor 13, and perform policy analysis based on the inference result.

For example, the network device may be a device such as a switch, a router, a radio access point (access point, AP), an optical network terminal (optical network terminal, ONT), or a firewall. In an example embodiment, the network device is configured to transmit the target data in a network. For example, the network device may be configured to process data. The processing performed by the network device on the data includes but is not limited to: forwarding the data from a current network device to another network device, stopping or reducing receiving of the data, discarding the data, reporting the data, and the like. It should be noted that the reporting the data means sending the data or related information of the data to a controller other than a current network device or a network administrator, so that the controller or the network administrator processes the data.

The network interface 14 may be an interface whose magnitude is megabyte (megabyte, MB), or may be an interface whose magnitude is gigabyte (gigabyte, GB). A magnitude of the network interface 14 is not limited in this embodiment. For example, the network interface 14 may be a 10 MB, 1 G, 10 G, 25 G, 40 G, 100 G, 400 G interface, and the like. The network interface 14 may receive a data stream sent by another network device, or send a data stream to another network device. For example, the network interface 14 may use received data stream as the target data, and because the first processor 11 is connected to the network interface 14, the network interface 14 may transmit the target data to the first processor 11, so that the first processor 11 receives the target data sent by the network interface 14. Then, the first processor 11 may determine feature information of the target data, and send the feature information to the second processor 12. For example, the first processor 11 may be a network processor.

The second processor 12 may be configured to receive the feature information sent by the first processor 11. Then, the second processor 12 may be configured to perform preprocessing in a form of calculation, format conversion, or the like on the received feature information to obtain a preprocessing result. A converted format is a format applicable to the third processor 13, that is, a format that can be understood by the third processor 13. For example, the second processor 12 may convert the feature information into a matrix format. For example, the second processor 12 includes but is not limited to an X86 (a computer language instruction set) processor, a fifth generation reduced instruction set computing (reduced instruction set computing-V, RISC-V) processor, an advanced reduced instruction set computing machine (advanced RISC machine, ARM), and a microprocessor without interlocked pipelined stages (microprocessor without interlocked pipelined stages, MIPS). For example, the second processor 12 may be a general purpose processor.

After the second processor 12 obtains the preprocessing result, because the second processor 12 is connected to the third processor 13, the second processor 12 may send the preprocessing result to the third processor 13. After receiving the preprocessing result sent by the second processor 12, the third processor 13 performs inference on the preprocessing result to obtain an inference result. For example, the third processor 13 may be a processor that can execute a machine learning algorithm, to perform inference on the preprocessing result by using an executed machine learning algorithm. Therefore, the third processor 13 may be an artificial intelligence (artificial intelligence, AI) processor. A machine learning algorithm executed by the third processor 13 is not limited in this embodiment. For example, the machine learning algorithm may be a neural network algorithm, or may be a non-neural network algorithm such as a support vector machine (support vector machine, SVM) algorithm or a random forest algorithm.

After the third processor 13 obtains the inference result, the third processor 13 returns the inference result to the second processor 12. In this case, the second processor 12 may perform policy analysis based on the inference result, and a result obtained by the second processor 12 by performing policy analysis may be used as an analysis result of the target data. Therefore, the first processor 11 may process, based on the analysis result, the target data received by using the network interface 14.

In this embodiment, data processing may be performed in an independent network device, and data does not need to be transmitted among different devices, so that a large delay caused by transmission is avoided, and data processing efficiency is improved. In addition, a small quantity of network transmission resources and storage resources are occupied, so that costs of data processing are low, and data leakage is avoided in a transmission process. Therefore, security and reliability of the data processing are ensured.

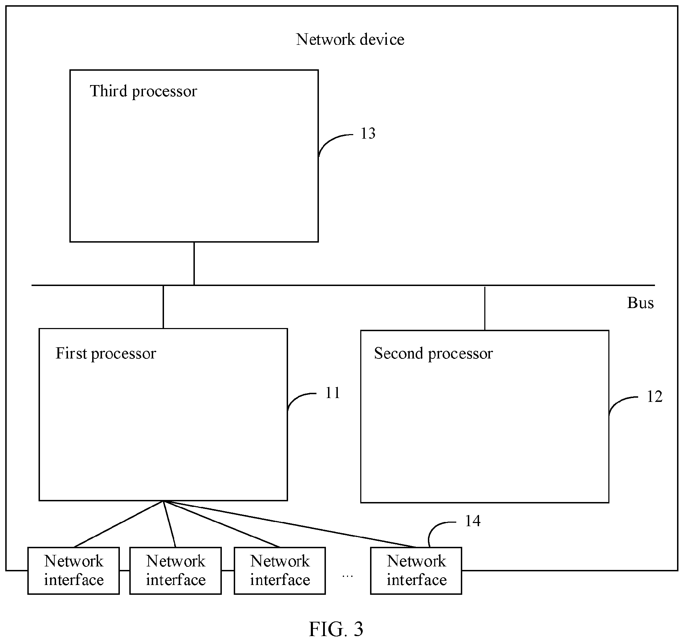

In the example embodiment, the first processor 11, the second processor 12, and the third processor 13 may be packaged in a same chip. For example, the first processor 11, the second processor 12, and the third processor 13 may be encapsulated in a system on a chip (system on chip, SOC) manner, and the chip implements functions of the first processor 11, the second processor 12, and the third processor 13. Alternatively, the first processor 11, the second processor 12, and the third processor 13 may be separately encapsulated in different chips. As shown in FIG. 3, the first processor 11, the second processor 12, and the third processor 13 may be connected to each other through a bus, so that different processors can exchange data and information. It may be understood that, regardless of whether the different processors are encapsulated, service content that needs to be executed by each processor is not affected.

For example, the data or the information exchange between the different processors needs to be implemented based on a memory. In response to that the different processors are located in the same chip, the chip is connected to the memory. Therefore, any processor in the chip may read the data or the information from the memory, or store the data or the information in the memory, so that another processor reads the data or the information from the memory. In response to that the different processors are connected to each other through the bus, the memory is also connected to the bus. Therefore, any processor may access the memory through the bus, to read and store the data or the information. It should be noted that the memory may be deployed in the network device, or may be a memory independent of the network device. A memory deployment manner is not limited in this embodiment. As long as the memory can be accessed, the data and the information can be stored.

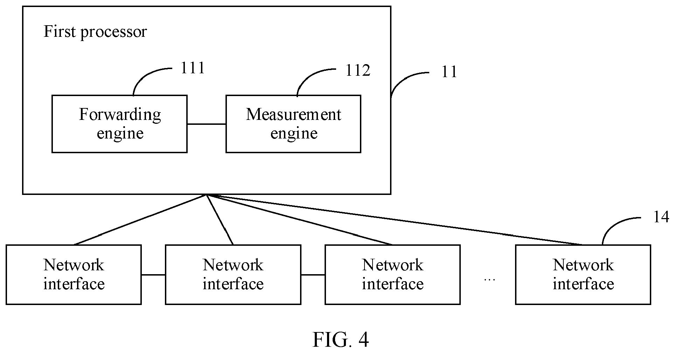

In an example embodiment, refer to FIG. 4, the first processor 11 includes a forwarding engine 111 and a measurement engine 112. The forwarding engine 111 and the measurement engine 112 are electrically connected. The forwarding engine 111 is configured to: receive target data sent by a network interface, and forward the target data to the measurement engine 112. The measurement engine 112 is configured to: receive the target data sent by the forwarding engine 111, and determine feature information of the target data. For example, in a process in which the forwarding engine 111 forwards the target data to the measurement engine 112, the forwarding engine 111 first replicates the target data, and then sends the replicated target data to the measurement engine 112. The measurement engine 112 determines the feature information. Therefore, the forwarding engine 111 retains received original target data, and the measurement engine 112, the second processor 12, and the third processor 13 perform processes such as feature information determining, preprocessing, reasoning, and policy analysis based on the replicated target data, to obtain a final analysis result. Then, the forwarding engine 111 processes the retained original target data based on the final analysis result.

For example, the feature information determined by the measurement engine 112 for the replicated target data includes but is not limited to a delay, a packet loss, a throughput, a packet length sequence, a packet interval sequence, and the like. The packet in the packet loss, the packet length sequence, and the packet interval sequence refers to a data packet, and the data stream received by the network device through the network interface 14 is a stream including a plurality of data packets. Data packets belonging to a same data stream usually have a same tuple feature. The tuple feature may be a 5-tuple or a 3-tuple. The 5-tuple includes a source internet protocol (Internet protocol, IP) address, a source port, a destination IP address, a destination port, and a transport layer protocol. The 3-tuple includes a source IP address, the destination IP address, and the transport layer protocol.

It should be noted that, in a process of determining the feature information, the measurement engine 112 usually needs to invoke a mapping table, and the mapping table may be stored in the foregoing memory. The mapping table may store reference information of historical data that has a same tuple feature as the replicated target data, and the measurement engine 112 may determine the feature information based on the reference information of the historical data. In addition, when the forwarding engine 111 processes the retained original target data based on the final analysis result, a corresponding access control list (access control lists, ACL) and a forwarding table are also required. Both the ACL and the forwarding table may be stored in the memory. For example, the analysis result determined by the second processor 12 through policy analysis may be one or more ACL rules used to indicate a processing manner. For example, an ACL rule may be used to reject a specific type of data. After determining the ACL rule, the second processor 12 may store the ACL rule in the ACL. Therefore, the forwarding engine 111 may read, from the memory, an ACL and a forwarding table that include the one or more ACL rules, to process the original target data based on the read ACL and forwarding table.

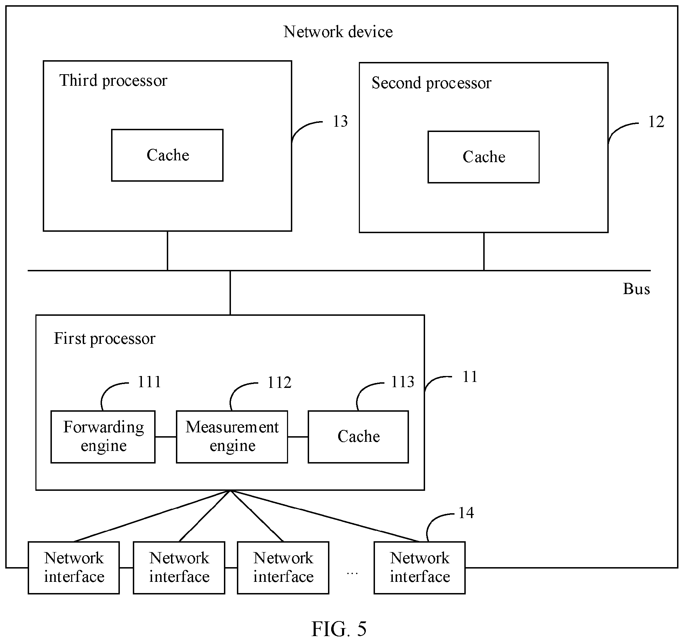

Considering that it may take a long time for the forwarding engine 111 and the measurement engine 112 to read or store data from the memory, which affects data processing efficiency, this application further provides the following example embodiment. For example, refer to FIG. 5, the first processor 11 further includes a cache (cache) 113, where the cache 113 is electrically connected to the forwarding engine 111 and the measurement engine 112 separately. The cache may be configured to cache data generated by the forwarding engine 111 and the measurement engine 112, and may also store the ACL, the forwarding table, and the mapping table. In this way, time required for the forwarding engine 111 and the measurement engine 112 to perform reading or storage is shortened, and the data processing efficiency is improved.

In addition to the first processor 11, refer to FIG. 5, in this embodiment, a corresponding cache may also be set for one or both of the second processor 12 and the third processor 13, to improve processing speed of the second processor 12 and the third processor 13, so that the data processing efficiency is further improved.

In the example embodiment, the second processor 12 is further configured to obtain running status information of the network device. Therefore, in addition to the feature information sent by the first processor 11, the second processor 12 further obtains the running status information of the network device. In a preprocessing process, the second processor 12 performs preprocessing on both the obtained feature information and the obtained running status information of the network device. In other words, the second processor 12 is configured to perform preprocessing on the feature information of the target data and a running status of the network device to obtain a preprocessing result.

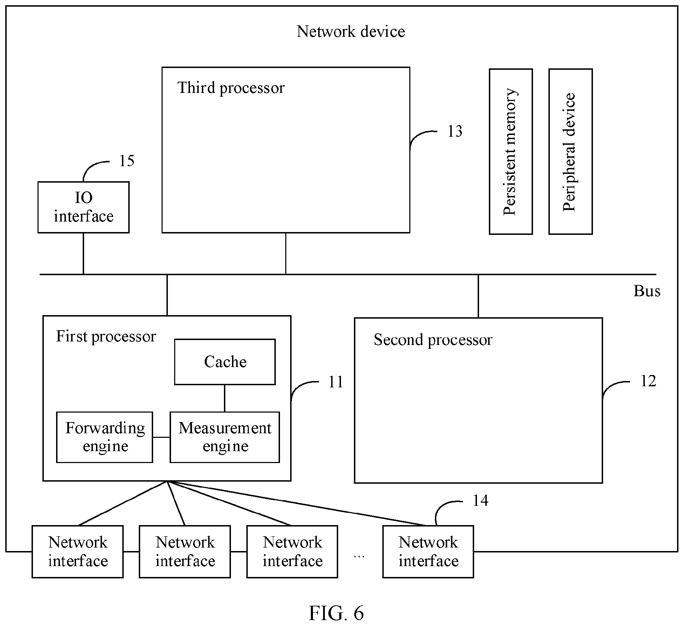

In the example embodiment, refer to FIG. 6. The network device further includes an input/output (input/output, IO) interface 15, the IO interface 15 is electrically connected to the second processor 12, and the IO interface 15 is configured to collect the running status information of the network device and transmit the running status information of the network device to the second processor 12. Correspondingly, the second processor 12 is configured to receive the running status information sent by the IO interface 15. Certainly, the IO interface 15 may also be electrically connected to the first processor 11, and transmit the collected running status information to the first processor 11. Correspondingly, the first processor 11 is further configured to receive the running status information sent by the IO interface 15, determine feature information of the running status information based on the received running status information, and send the feature information of the running status information to the second processor 12. Therefore, the second processor 12 may perform preprocessing on the feature information of the target data and the feature information of the running status information.

Regardless of which manner is used, by setting the IO interface 15, in this embodiment, not only the data stream received through the network interface 14 can be processed, but also the running status information of the network device can be processed. In other words, the network device may process more types of data, a processing manner is flexible, and an application scope is wide. In addition, subsequently, the running status of the network device may be adjusted based on a processing result of the running status information. For example, the IO interface 15 may be a universal serial bus (universal serial bus, USB) interface. The running status information includes but is not limited to a memory occupation size, a running temperature of the network device, and the like.

In addition, it can be learned from FIG. 6 that the network device may further include a persistent memory and a peripheral device. The persistent memory may be a hard disk drive, or may be a solid-state drive (solid state disk, SSD). In response to the memory being deployed within the network device, the persistent storage may be connected to the memory so that the memory can access the persistent storage. For example, a connection manner may be connection through a bus. The peripheral device may include a device such as a fan or a power supply.

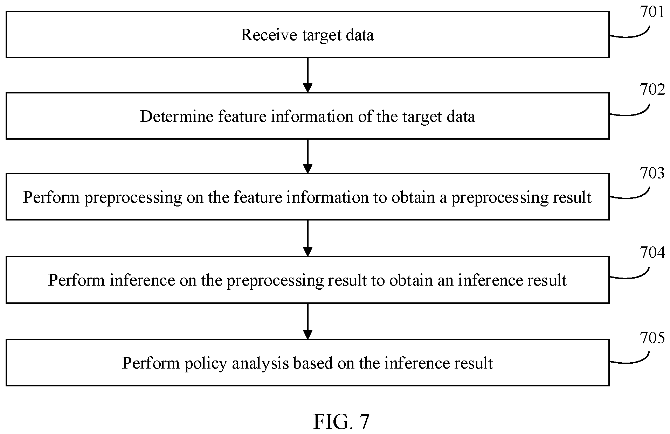

This application further provides a data processing method. The method may be applied to a network device. For example, the method is applied to any one of the network devices shown in FIG. 2 to FIG. 6. As shown in FIG. 7, the method includes the following steps.

### Step 701: Receive target data.

In an example embodiment, a first processor may receive data stream through a network interface, and use the data stream as target data. The data stream includes data packets transmitted in a form of a stream. In the example embodiment, the data stream may be transmitted by using a plurality of different protocols, so that the network interface obtains the data stream. For example, the data stream may be transmitted by using the transmission control protocol (transmission control protocol, TCP), or may be transmitted by using the user datagram protocol (user datagram protocol, UDP). Certainly, the target data is not limited in this embodiment. In addition to the foregoing manner, the target data may be obtained in another manner.

### Step 702: Determine feature information of the target data.

After obtaining the target data, the first processor may further determine the feature information of the target data. For example, a forwarding engine included in the first processor replicates received original target data, to obtain replicated target data. It may be understood that the target data and the replicated target data are completely consistent data. Then, the forwarding engine sends the replicated target data to a measurement engine, so that the measurement engine determines feature information of the replicated target data. Because the target data is completely consistent with the replicated target data, the feature information of the replicated target data may be used as the feature information of the target data.

In a process in which the measurement engine determines the feature information, in response to that the target data is a data stream received through the network interface, the feature information may be information about a plurality of different data packets included in the data stream. For example, the feature information includes but is not limited to information such as a packet loss rate of the plurality of data packets, a throughput of the plurality of data packets, a packet length sequence formed by the different data packets, and a packet interval sequence between the different data packets. Alternatively, the feature information may be information for a single data packet, for example, information such as a transmission delay of a data packet between different network devices, a packet length of the data packet, and time at which the data packet arrives at the network device. In response to that the target data is running status information received through an IO interface, the feature information includes but is not limited to information such as a variation amount of a main memory occupation size and a variation amount of a device temperature.

For a trigger manner of determining the feature information, considering that the network device receives other data in addition to the target data, batch determining of the feature information and other feature information of the target data may be triggered when it is detected that a sum of a quantity of received target data and a quantity of received other data is not less than a reference quantity threshold. Alternatively, the determining of the feature information may be triggered at an interval of reference time. The reference time may be, for example, 100 milliseconds. Data of the reference time is not limited in this embodiment.

In the example embodiment, the determining feature information of the target data includes the following steps 7021 and 7022.

**Step 7021:** Obtain a hash value corresponding to the target data, and read a mapping table including a plurality of entries.

The target data usually has a corresponding data identifier. Therefore, the replicated target data also has a corresponding data identifier. The data identifier is used to uniquely indicate the target data, to distinguish the target data from other data. For example, when the target data is a data stream, a 5-tuple of the data stream may be used as the data identifier. The data identifier corresponding to the replicated target data may be converted into a hash value by invoking a hash algorithm, to obtain a hash value corresponding to the replicated target data. It should be noted that hash values corresponding to different target data are also different. Similar to the data identifier, the hash value can also uniquely indicate the target data.

In addition, the mapping table including the plurality of entries needs to be obtained. If the first processor has a cache, the cache reads the mapping table from a memory and stores the read mapping table, so that the measurement engine directly reads the mapping table from the cache, so that efficiency of reading the mapping table is improved. Alternatively, if the first processor does not have a cache, the measurement engine needs to directly read the mapping table from the memory.

**Step 7022:** Determine, from the plurality of entries included in the mapping table based on the hash value, a target entry corresponding to the target data.

The mapping table has a plurality of entries, and each entry corresponds to a hash value obtained by converting a data identifier. The entry is used to store reference information of historical data that has the data identifier, and the historical data is data that has been received before the target data is received. A function of determining the target entry is to determine the feature information of the target data based on reference information of historical data stored in the target entry. For example, the data is a data stream including a plurality of data packets. In this case, the reference information may be a packet length of each data packet, a timestamp, a device identifier of each network device that arrives in a transmission process, and the like. After the hash value corresponding to the target data is obtained, the target entry corresponding to the target data may be determined by using the obtained mapping table and the obtained hash value.

For the obtained hash value of the target data, matching may be performed between the hash value and a hash value corresponding to each entry in the mapping table. If the obtained hash value is consistent with a hash value corresponding to an entry in the mapping table, it indicates that the entry is used to store the reference information of the historical data that has the same data identifier as the target data, and the entry is the target entry corresponding to the target data. Therefore, the feature information of the target data may be further determined by using the reference information stored in the target entry. For details, refer to step 7023.

**Step 7023:** In response to that the target entry is determined, obtain reference information of the target data, and determine the feature information based on the reference information of the target data and the reference information stored in the target entry.

For example, in this embodiment, the reference information stored in the target entry may be read from the target entry, so that comparison calculation is performed between the obtained reference information of the target data and the read reference information stored in the target entry, to determine the feature information. For example, the target data is a data stream, and the feature information is a delay of a data packet in the data stream. Because the delay is time required for transmitting the data packet among different devices, the delay may be calculated based on a time difference between time at which the network device receives the data packet twice. For example, after the data packet is obtained, whether the target entry stores time at which the data packet is obtained last time may be determined. If the time at which the data packet is obtained last time is stored, the delay can be calculated based on the difference between the time at which the data packet is obtained last time and time at which the data packet is obtained currently. Alternatively, if the time at which the data packet is obtained last time is not stored, when the data packet is received next time, a delay may be calculated by using a time difference between time at which the data packet is obtained currently and time at which the data packet is obtained next time.

It may be understood that, for the reference information of the target data obtained this time, the reference information of the target data may also be stored in the target entry before or after the feature information is determined, so that the reference information can be read from the target entry again in a subsequent data processing process, and the subsequent data processing process is completed.

Certainly, in addition to comparing the stored reference information of the target data with the reference information of the historical data to determine the feature information, the feature information of the target data may be determined based only on the reference information of the target data. For example, the target data is a data stream, and the feature information is a throughput of a plurality of data packets. In this case, the reference information may be a timestamp and a packet length of each of the plurality of data packets included in the data stream. Based on the timestamp of each data packet, which data packets are received by the network device in unit time may be determined, and a sum of one or more packet lengths of these received data packets is the throughput.

Based on the descriptions in steps 7021 to 7023, in this embodiment, all data with a same data identifier may be stored in a same entry in the mapping table. Therefore, in addition to the reference information of the target data, the target entry corresponding to the target data may further store information about other data that is obtained at different moments and that has the same data identifier as the target data. Therefore, the feature information of the target data may be determined by combining the reference information of the target data and other information.

In the example embodiment, the method provided in this embodiment further includes:
**Step 7024:** In response to that the target entry is not determined, add a new entry corresponding to the target data to the mapping table. The reference information of the target data is obtained, the reference information is stored in the new entry, and the feature information is determined based on the reference information stored in the new entry.

In response to that the target entry is not determined, it indicates that before the target data, the network device does not receive any other data that has the same data identifier as the target data. Therefore, the new entry may be added to the mapping table based on the hash value of the target data, and reference information of each data packet included in the target data is stored in the new entry. Therefore, the feature information of the target data may be determined based on the reference information stored in the new entry. It may be understood that, in addition to a manner in which the reference information of the target data is first stored in the new entry, and then the reference information is read from the new entry to determine the feature information, the feature information may be determined based on the reference information while the reference information is stored in the new entry. Alternatively, when the other data that has the same data identifier as the target data is subsequently received, reference information of the other data is also stored in the new entry, so that the feature information of the target data is determined based on the information stored in the new entry.

In an example embodiment, after the feature information of the target data is determined, the method further includes: In response to a need to aggregate the feature information, a rule group is obtained. The rule group includes one or more reference rules. One or more information groups are obtained by aggregating the feature information according to the rule group.

The rule group may be stored in the cache or the memory, so that the measurement engine obtains the rule group. The feature information is aggregated according to the rule group, so that similar feature information can be aggregated into a same information group to facilitate subsequent analysis and processing. In addition, a processing and analysis process can be not limited to the feature information itself, but be distributed to a terminal, an application program, or the like that generates the feature information.

For example, if the target data is a data stream, one or more items in a 5-tuple of the data stream may be used as the rule group. For example, feature information of data streams with a same source IP address may be aggregated into a same information group, and feature information of the information group is information from a same terminal. Subsequently, information related to the terminal may be determined by performing processing and analysis on the feature information of the information group, so that the target data may be processed based on the information related to the terminal. Alternatively, feature information of data streams with a same source IP address and a same source port may be aggregated into a same information group, and feature information of the information group is information from a same application program on a same terminal. Information related to the application program may be determined by performing processing and analysis on the feature information of the information group, so that the target data is performed based on the information related to the application program.

In addition, when the target data is the running status information, one or more parts may be used as the rule group, and feature information determined by using running status information generated by parts in the rule group may be aggregated into a same information group. For example, variation amounts of a fan rotation speed are aggregated into a same information group, and temperature variation amounts of the network device are aggregated into a same information group, or variation amounts of a fan rotation speed and temperature variation amounts of the network device are aggregated into a same information group.

### Step 703: Perform preprocessing on the feature information to obtain a preprocessing result.

After determining the feature information, the measurement engine may send the feature information to a second processor, and the second processor performs preprocessing on the feature information to obtain the preprocessing result. In the example embodiment, the feature information may be aggregated in step 702 to obtain one or more information groups. Therefore, the performing preprocessing on the feature information to obtain a preprocessing result includes: performing preprocessing on the one or more information groups to obtain the preprocessing result.

In addition, before the performing preprocessing on the feature information of the target data, the method further includes: The second processor obtains the running status information of the network device. Correspondingly, the performing preprocessing on the feature information includes: performing preprocessing on the target data and the running status information of the network device. The running status information is information generated by the network device in a running status, for example, a main memory occupation size in the network device, a fan rotation speed, and a device running temperature.

Certainly, regardless of whether the feature information or the information group including the feature information is processed, the following example manner may be used: The performing preprocessing on the feature information to obtain a preprocessing result includes: performing calculation on the feature information to obtain a calculation result; and converting the calculation result into a feature matrix, and using the feature matrix as the preprocessing result.

Calculation performed by the second processor on the feature information may be calculating an average value of the feature information, calculating a variance of the feature information, or the like. The calculation performed by the second processor is not limited in this embodiment. During the implementation, different calculation methods may be used based on different feature information, or a default calculation method may be set based on experience. After the calculation result is obtained through calculation, the calculation result may be converted into the feature matrix. The feature matrix is a data format that can be understood by a third processor. It can be learned that a function of converting the calculation result is to enable the third processor to understand the calculation result. After the conversion is completed, the feature matrix may be used as processed feature information.

Based on the descriptions in step 702, it can be learned that the measurement engine usually triggers determining of the feature information when a sum of a data volume of the target data and a data volume of the another data is not less than a reference quantity threshold, or at an interval of reference time. Therefore, in addition to the feature information of the target data, feature information determined by the measurement engine each time includes feature information of other data. Therefore, the second processor also converts the feature information of the target data and the feature information of the other data, to obtain the feature matrix as the preprocessing result. During the conversion, feature information of same data may be converted into a vector in the feature matrix, and the vector may be corresponding to the data identifier of the data, to facilitate differentiation after a processing result is subsequently obtained.

In the example embodiment, the using the feature matrix as the processed feature information includes: normalizing the feature matrix to obtain a normalized feature matrix; and using the normalized feature matrix as the preprocessing result. In a normalization process, a value of each matrix element in the feature matrix may be adjusted to a reference range, to prevent a subsequent analysis process from being affected by different numerical dimensions and magnitudes of the matrix elements. The reference range is not limited in this embodiment. For example, the reference range may be -1 to 1, or may be another range that is set based on actual needs or experience.

### Step 704: Perform inference on the preprocessing result to obtain an inference result.

After obtaining the preprocessing result, the second processor may send the preprocessing result to the third processor, and the third processor performs inference on the preprocessing result to obtain the inference result. The third processor may perform inference by executing a machine learning algorithm. For example, the third processor inputs the preprocessing result into the machine learning algorithm, to obtain an output result of the machine learning algorithm, and uses the output result of the machine learning algorithm as the inference result.

It should be noted that, based on the descriptions in step 703, it can be learned that the preprocessing result usually includes a vector corresponding to the target data and a vector corresponding to other data. Therefore, the inference result obtained by the third processor also includes an inference result of the target data and an inference result of other data. The third processor may enable an inference result of each piece of data to correspond to a data identifier of the data, so that a processor subsequently performs differentiation.

### Step 705: Perform policy analysis based on the inference result.

After obtaining the inference result, the third processor returns the inference result to the second processor, and the second processor performs policy analysis based on the inference result. For example, the second processor may store a correspondence between the inference result and an analysis result of policy analysis. After reading the inference result, the second processor may search the correspondence based on the read inference result, to complete a policy analysis process. It should be noted that when the third processor obtains inference results of a plurality of pieces of data, because each inference result is corresponding to one data identifier, the target data may be determined based on the data identifier, and then the analysis result of the target data is determined in the manner described above.

For example, the analysis result determined by the second processor may be used to indicate a manner in which the forwarding engine forwards the target data. For example, the forwarding manner of the target data may be a priority for forwarding the target data, a packet loss indication for forwarding the target data, or the like. Alternatively, the forwarding manner may be used to indicate the forwarding engine to discard the target data, or may be used to indicate to reject or reduce other data that has a same data identifier as the target data and that is after the target data is received, or may be used to indicate the forwarding engine to report the target data to a controller or a network administrator, or certainly, may be used to indicate the forwarding engine to normally forward the target data. For a determined analysis result, the second processor uses the analysis result as an ACL rule and configures the ACL rule in the ACL, so that the forwarding engine can obtain the analysis result by reading the ACL, and process the target data based on the obtained analysis result.

During the processing, the forwarding engine can read the ACL and a forwarding table. The forwarding engine first determines the analysis result of the target data from the ACL, and if the analysis result indicates a forwarding manner of forwarding the target data, determines, from the forwarding table, that the target data is applicable to layer 2 forwarding or layer 3 forwarding. Then, layer 2 forwarding or layer 3 forwarding applicable to the target data may be performed on the target data through the network interface based on the forwarding manner indicated by the analysis result. If the analysis result indicates normal forwarding of the target data or reporting of the target data, the forwarding engine may directly perform layer 2 forwarding or layer 3 forwarding applicable to the target data through the network interface. If the analysis result indicates that the target data is completely discarded, the forwarding table does not need to be read, and the target data is directly discarded.

Based on the data processing method, application type identification, network transmission optimization, and traffic monitoring may be performed. Next, cases of three application scenarios such as the application type identification, the network transmission optimization, and the traffic monitoring are separately described by using examples.

**Application type identification:** For example, with reference to the process in the embodiment shown in FIG. 7, the determining feature information of target data includes: determining packet lengths and timestamps of a plurality of data packets in the target data. The performing preprocessing on the feature information of the target data to obtain a preprocessing result includes: obtaining a packet length sequence of the target data based on the packet lengths and the timestamps of the plurality of data packets, where a plurality of packet lengths in the packet length sequence correspond to one timestamp, and converting the packet length sequence into a matrix. The performing inference on the preprocessing result to obtain an inference result includes: identifying, based on the matrix, an application type to which the target data belongs. The performing policy analysis based on the inference result includes: determining a forwarding priority of the target data based on the application type to which the target data belongs.

For example, a packet length and a timestamp of each data packet in the target data are determined, a packet length sequence of the target data is obtained based on the packet lengths and the timestamps of the plurality of data packets, where each packet length in the packet length sequence corresponds to one timestamp, and the packet length sequence is converted into a matrix. Then, an application type to which the target data belongs is identified based on the matrix, and the forwarding priority of the target data is determined based on the application type to which the target data belongs.

For example, the first processor determines packet lengths and timestamps of the plurality of data packets in the target data as the feature information, the second processor may obtain the packet length sequence corresponding to the target data based on the packet lengths and the timestamps of the plurality of data packets, and a plurality of packet lengths in the sequence correspond to one timestamp. The second processor further performs format conversion on the packet length sequence to obtain an N-dimensional matrix (tensor), to send the N-dimensional matrix to the third processor. It may be understood that, in addition to the feature information of the target data, the N-dimensional matrix may further include the feature information of other data.

The third processor loads an AI algorithm inference model in advance. After receiving the N-dimensional matrix sent by the second processor, the third processor inputs the N-dimensional matrix into the loaded AI algorithm inference model, performs inference on the received N-dimensional matrix by using the AI algorithm inference model, and may output the application type to which the target data belongs. The application type is the inference result. For example, the application type may be a game application, a video play application, or a web page application. For example, the inference result output by the AI algorithm inference model may be a vector of [0, 0, 1, 1, 0, 2], and the vector indicates application types corresponding to six different data streams. 0 may represent the game application, 1 may represent the video play application, and 2 may represent the web page application.

The second processor performs policy analysis based on the application type, and determines the analysis result of the target data. For example, the second processor may configure different quality of service (quality of service) levels for the data streams based on different application types. For example, the game application program requires a low delay. Therefore, an analysis result corresponding to the game application program needs to indicate preferential forwarding. The video play application requires a high throughput. Therefore, an analysis result corresponding to the video play application needs to ensure that an amount of data forwarded in unit time meets a requirement. The web page application is applicable to a best-effort manner. Therefore, an analysis result corresponding to the web application may indicate a low priority. Then, the first processor may forward the target data based on the analysis result.

It should be noted that, for the determined application type, the first processor may set a differentiated services code point (differentiated series code point, DSCP) in an IP header of the target data to indicate a forwarding priority of the application type, so that another network device forwards data based on a corresponding forwarding priority.

**Network transmission optimization:** The determining feature information of the target data includes: determining the timestamps of the plurality of data packets in the target data and device identifiers of a plurality of network devices through which the data packets pass in a transmission process. The performing preprocessing on the feature information of the target data to obtain a preprocessing result includes: calculating, based on the timestamps of the plurality of data packets and the device identifiers of the plurality of network devices through which the data packets pass in the transmission process, time of the data packets pass through the plurality of network devices, and converting the time of the data packets pass through the plurality of network devices into a matrix. The performing inference on the preprocessing result to obtain an inference result includes: determining transmission congestion statuses of the plurality of network devices based on the matrix. The performing policy analysis based on the inference result includes: determining a forwarding path of the target data based on the transmission congestion statuses of the plurality of network devices.

For example, a timestamp of each data packet in the target data and a device identifier of each network device through which the data packets pass in a transmission process are determined. Time of the data packets pass through each network device is calculated based on the timestamp of each data packet and the device identifier of each network device through which the data packets pass in the transmission process, and the time of the data packets pass through each network device is converted into a matrix. A transmission congestion status of each network device is determined based on the matrix. Then, a forwarding path of the target data is determined based on the transmission congestion status of each network device.

For example, the first processor determines timestamps of a plurality of data packets in the target data and device identifiers of a plurality of network devices through which the data packets pass. The second processor may calculate, based on the timestamps and the device identifiers, time of the data packets pass through the plurality of network devices, and the third processor obtains transmission congestion statuses of the network devices through inference based on the time of the data packets pass through the network devices. Then, the second processor may determine an optimization policy based on the transmission congestion statuses, for example, discarding a packet. Alternatively, the second processor indicates a network device configured to send data to a network device in which a transmission congestion status already exists to stop sending the data, and selects another network device in which no congestion status exists to send the data, to determine a proper forwarding path for the target data. The first processor may perform forwarding according to the optimization policy determined by the second processor, to facilitate optimization of another network device.

**Traffic monitoring:** For example, with reference to the process in the embodiment shown in FIG. 7, the determining feature information of target data includes: determining packet lengths and timestamps of a plurality of data packets in the target data. The performing preprocessing on the feature information of the target data to obtain a preprocessing result includes: determining, based on the timestamps of the plurality of data packets, one or more data packets received by the network device in unit time, calculating a sum of one or more packet lengths of the data packets received by the network device in the unit time to obtain a throughput, and converting the throughput into a matrix. The performing inference on the preprocessing result to obtain an inference result includes: determining, based on the matrix, whether traffic of the network device is abnormal, to obtain a traffic monitoring result. The performing policy analysis based on the inference result includes: determining a forwarding manner of the target data based on the traffic monitoring result.

For example, a packet length and a timestamp of each data packet in the target data are determined, one or more data packets received by the network device in unit time is determined based on the timestamp of each data packet, a sum of one or more packet lengths of the data packets received by the network device in the unit time is calculated to obtain a throughput, and the throughput is converted into a matrix. Whether traffic of the network device is abnormal is determined based on the matrix, to obtain a traffic monitoring result. Then, a forwarding manner of the target data is determined based on the traffic monitoring result.

For example, the first processor determines the timestamps and the packet lengths of the plurality of data packets included in the target data, and the second processor determines, based on the timestamps, one or more data packets that arrive at the network device in the unit time, and calculates a sum of one or more packet lengths of the data packets that arrive at the network device in the unit time, to obtain the throughput. The third processor device performs inference on the throughput, to determine whether an abnormality exists in the throughput. The second processor determines different analysis results based on an inference result indicating whether an abnormality exists. For example, when the analysis result is that no abnormality exists, the analysis result indicates that the target data is normally forwarded. When the analysis result is that the abnormality exists, it indicates that the target data may be malicious attack data. Therefore, the analysis result may indicate to discard the target data.

In conclusion, in this embodiment, processing such as data collection, feature extraction, preprocessing, reasoning, and policy analysis may be performed by an independent network device, and data transmission does not need to be performed between different devices as in a related technology, so that a large delay caused by transmission is avoided, and data processing efficiency is improved. In addition, a small quantity of network transmission resources and storage resources are occupied, so that costs of data processing are low, and data leakage is avoided in a transmission process. Therefore, security and reliability of the data processing are ensured.

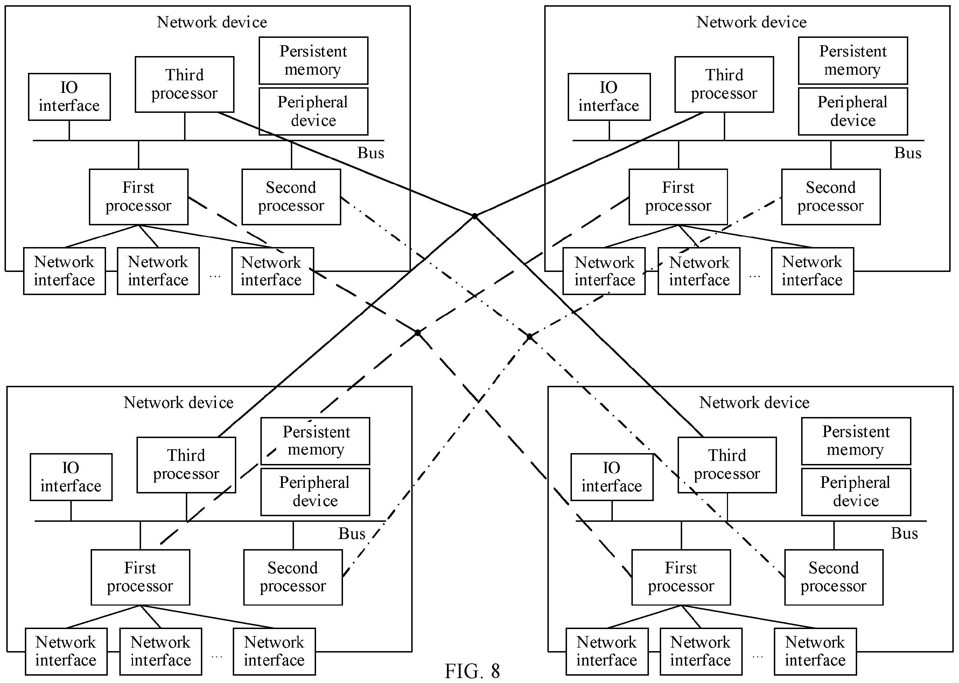

An embodiment of this application further provides a data processing system. Refer to FIG. 8. The system includes a plurality of network devices. First processors in the plurality of network devices are electrically connected to each other, second processors in the plurality of data devices are electrically connected to each other, and third processors in the plurality of network devices are electrically connected to each other. Therefore, in the data processing system, the plurality of network devices may jointly process target data, so that data processing time is further shorted, and data processing efficiency is improved. It should be noted that processors connected to each other in the plurality of network devices need to negotiate a data format and a policy in advance. In a subsequent processing process, each processor uniformly completes data processing based on a negotiated data format and policy. There may be two, three, or more devices. A quantity is not limited in this embodiment, and a quantity of devices may be determined based on an actual requirement. For example, when there is a large quantity of target data, a large quantity of devices is determined.

For example, different interconnected processors are configured to transmit a synchronization signal. A first processor in each network device is configured to determine feature information of the target data based on the synchronization signal. A second processor in each network device is configured to perform preprocessing on the feature information based on the synchronization signal, to obtain a preprocessing result. A third processor in each network device is configured to perform inference on the preprocessing result based on the synchronization signal, to obtain an inference result. The second processor in each network device is further configured to perform policy analysis based on the synchronization signal and the inference result.

A function of the synchronization signal is that each processor may process the target data of a same time dimension in a same time period. For example, each first processor determines, based on the synchronization signal, feature information of target data collected by a network interface from a moment A to a moment B, and after each first processor determines the feature information of the target data from the moment A to the moment B, the first processor further starts to determine feature information of target data from the moment B to the moment C.

For example, there is a topological relationship between different network devices. The topological relationship indicates an upper/lower-level relationship between the different network devices. A transmission path of the target data in the different network devices matches the upper/lower-level relationship indicated by the topological relationship. In other words, the transmission path is a path of transmission from a lower-level network device to an upper-level network device. Different interconnected processors are configured to process a part of data in the target data in sequence based on the upper/lower-level relationship indicated by the topological relationship, and send a processing result to a processor in another upper-level network device, where the processing result is a result obtained through policy analysis.

For example, there are three network devices. If the upper-level and lower-level devices indicated by the topology relationship are the first network device, the second network device, and the third network device in a sequence from bottom to top, the first network device, the second network device, and the third network device process a part of the target data in sequence. For example, after performing policy analysis on a first part of the data in the target data to obtain the analysis result, a first network device may transmit the analysis result to a second network device. The second network device performs policy analysis on a second part of the data in the target data with reference to the analysis result of the first network device, to further obtain the analysis result, and then transmits the target data and the analysis result to a third network device. Finally, the third network device processes, based on the analysis result of the first network device and the analysis result of the second network device, a third part that is of the target data and that has not been processed, so that processing of the target data is implemented through cooperation of the different network devices.

It should be noted that, for each processor in a same network device, although the processor is electrically connected to a processor in another network device, in a working process of the processor, data or information does not need to be transmitted from one device to another device, but data processing may be completed in the one device.

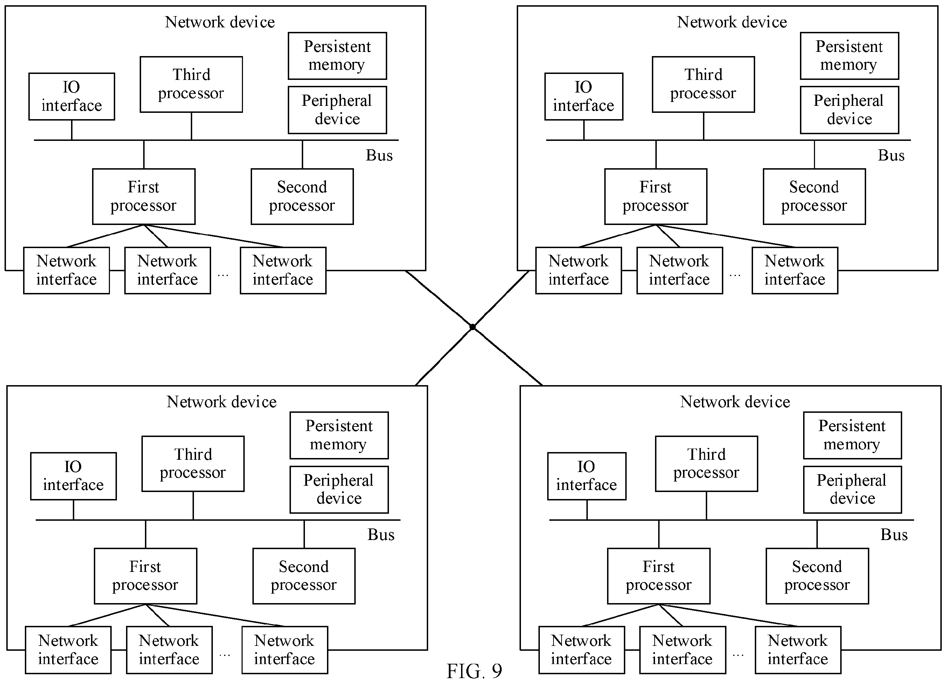

An embodiment further provides a data processing system. Refer to FIG. 9. The data processing system includes a plurality of network devices that are electrically connected to each other. Therefore, the plurality of network devices may independently process different data, or may process same data through cooperation. A processing manner is flexible, and a computing capability requirement of each network device is not high. In the latter case, each network device may contribute a specific computing capability based on an actual computing capability of the network device or a specified policy.

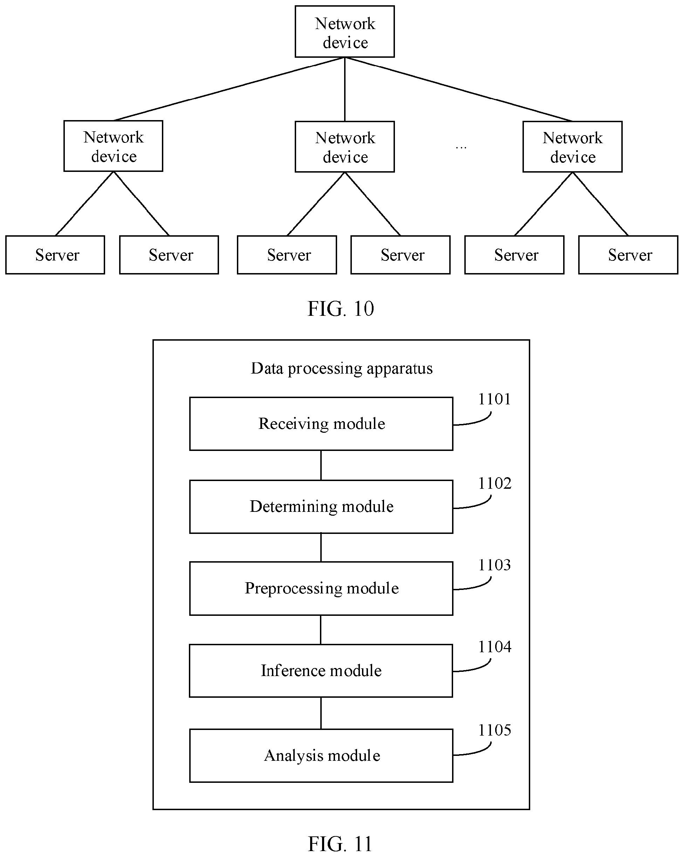

For example, each of the plurality of network devices is configured to: receive target data, and obtain an inference result based on the target data. One of the plurality of network devices is configured to: summarize the inference result obtained by each of the network devices, and perform policy analysis based on a summarized inference result. The plurality of network devices may determine, through negotiation, a dominant device. Refer to FIG. 10. An uppermost device is the dominant device. Therefore, after completing inference and obtaining the inference result, each network device may summarize the inference result to the dominant device, so that the dominant device uniformly performs policy analysis based on the summarized inference result, to determine a final analysis result. Then, the dominant device further delivers the final analysis result to other network devices, so that the other network devices separately perform data processing based on the final analysis result.

An embodiment of this application further provides a data processing apparatus. Refer to FIG. 11, the apparatus includes the following modules.

A receiving module 1101 is configured to receive target data. For example, the receiving module 1101 may perform related content of step 701 shown in FIG. 7.

A determining module 1102 is configured to determine feature information of the target data. For example, the determining module 1102 may perform related content of step 702 shown in FIG. 7.

A preprocessing module 1103 is configured to perform preprocessing on the feature information to obtain a preprocessing result. For example, the preprocessing module 1103 may perform related content of step 703 shown in FIG. 7.

An inference module 1104 is configured to perform inference on the preprocessing result to obtain an inference result. For example, the inference module 1104 may perform related content of step 704 shown in FIG. 7.

An analysis module 1105 is configured to perform policy analysis based on the inference result. For example, the analysis module 1105 may perform related content of step 705 shown in FIG. 7.

In an example embodiment, the determining module 1102 is configured to: obtain a hash value corresponding to the target data, read a mapping table including a plurality of entries; determine, from the plurality of entries included in the mapping table based on the hash value, a target entry corresponding to the target data; and in response to that the target entry is determined, obtain reference information of the target data, and determine the feature information based on the reference information of the target data and reference information stored in the target entry.

In the example embodiment, the determining module 1102 is further configured to: in response to that the target entry is not determined, add a new entry corresponding to the target data to the mapping table; and obtain the reference information of the target data, store the reference information in the new entry, and determine the feature information based on the reference information.

In the example embodiment, the apparatus further includes: an aggregation module, configured to: in response to a need to aggregate the feature information, obtain a rule group, where the rule group includes one or more reference rules; and aggregate the feature information according to the rule group to obtain one or more information groups; and
the preprocessing module 1103 is configured to perform preprocessing on the one or more information groups to obtain the preprocessing result.

In the example embodiment, the apparatus further includes: an obtaining module, configured to obtain running status information of the network device; and the preprocessing module is configured to perform preprocessing on the target data and the running status information of the network device.

In the example embodiment, the determining module 1102 is configured to determine packet lengths and timestamps of a plurality of data packets in the target data.

The preprocessing module 1103 is configured to: obtain a packet length sequence of the target data based on the packet lengths and the timestamps of the plurality of data packets, where a plurality of packet lengths in the packet length sequence correspond to one timestamp, and convert the packet length sequence into a matrix.

The inference module 1104 is configured to identify, based on the matrix, an application type to which the target data belongs.

The analysis module 1105 is configured to determine a forwarding priority of the target data based on the application type to which the target data belongs.

In the example embodiment, the determining module 1102 is configured to determine the timestamps of the plurality of data packets in the target data and device identifiers of a plurality of network devices through which the data packets pass in a transmission process.

The preprocessing module 1103 is configured to: calculate, based on the timestamps of the plurality of data packets and the device identifiers of the plurality of network devices through which the data packets pass in the transmission process, time of the data packets pass through the plurality of network devices, and convert the time of the data packets pass through the plurality of network devices into a matrix.

The inference module 1104 is configured to determine transmission congestion statuses of the plurality of network devices based on the matrix.

The analysis module 1105 is configured to determine a forwarding path of the target data based on the transmission congestion statuses of the plurality of network devices.

In the example embodiment, the determining module 1102 is configured to determine packet lengths and timestamps of a plurality of data packets in the target data.

The preprocessing module 1103 is configured to: determine, based on the timestamps of the plurality of data packets, one or more data packets received by the network device in unit time, calculate a sum of one or more packet lengths of the data packets received by the network device in the unit time to obtain a throughput, and convert the throughput into a matrix.

The inference module 1104 is configured to determine, based on the matrix, whether traffic of the network device is abnormal, to obtain a traffic monitoring result.

The analysis module 1105 is configured to determine a forwarding manner of the target data based on the traffic monitoring result.

In conclusion, in this embodiment, processing such as data collection, feature extraction, preprocessing, reasoning, and policy analysis may be performed by an independent network device, and data transmission does not need to be performed between different devices as in a related technology, so that a large delay caused by transmission is avoided, and data processing efficiency is improved. In addition, a small quantity of network transmission resources are occupied, so that costs of data processing are low, and data leakage is avoided in a transmission process. Therefore, security and reliability of the data processing are ensured.

It should be understood that, when the apparatus provided in FIG. 11 implements functions of the apparatus, division into the foregoing functional modules is merely used as an example for description. In actual application, the foregoing functions may be allocated to different functional modules for implementation based on a requirement. In other words, a device is divided into different functional modules in terms of an inner structure, to implement all or a part of the functions described above.

An embodiment of this application provides a computer program (product). The computer program (product) includes computer program code. When the computer program code is run by a computer, the computer is enabled to perform the method according to any one of the foregoing example embodiments.

An embodiment of this application provides a readable storage medium. The readable storage medium stores a program or instructions. When the program or the instructions run on a computer, the computer is enabled to perform the method according to any one of the foregoing example embodiments.

An embodiment of this application provides a chip, including a processor. The processor is configured to invoke instructions stored in the memory and run the instructions, to enable a communication device on which the chip is installed to perform the method according to any one of the foregoing example embodiments.

An embodiment of this application provides another chip. The chip includes an input interface, an output interface, a processor, and a memory. The input interface, the output interface, the processor, and the memory are connected through an internal connection path. The processor is configured to execute code in the memory. When the code is executed, the processor is configured to perform the method according to any one of the foregoing example embodiments.

It should be understood that the processor may be a central processing unit (Central Processing Unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitation, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

This application provides a computer program. When the computer program is executed by a computer, a processor or the computer is enabled to perform corresponding steps and/or procedures in the foregoing method embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, all or some of the procedures or functions in this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), or a semiconductor medium (for example, a solid-state drive (Solid State Disk)).

The foregoing descriptions are merely embodiments of this application, but are not intended to limit this application. Any modification, equivalent replacement, or improvement made without departing from the spirit and principle of this application should fall within the protection scope of this application.

## Claims

1. A network device, wherein the network device comprises: a first processor (11), a second processor (12), a third processor (13), and a network interface (14), wherein the first processor (11) is separately connected to the network interface (14) and the second processor (12), and the second processor (12) is further connected to the third processor (13), wherein
the network interface (14) is configured to receive target data, and transmit the target data to the first processor (11);
the first processor (11) is configured to: receive the target data sent by the network interface (14), determine feature information of the target data, and send the feature information of the target data to the second processor (12);
the second processor (12) is configured to: receive the feature information that is of the target data and sent by the first processor (11), perform preprocessing on the feature information of the target data to obtain a preprocessing result, and send the preprocessing result to the third processor (13);
the third processor (13) is configured to: receive the preprocessing result sent by the second processor (12), perform inference on the preprocessing result to obtain an inference result, and send the inference result to the second processor (12); and
the second processor (12) is further configured to: receive the inference result sent by the third processor (13), and perform policy analysis based on the inference result.

2. The network device according to claim 1, wherein the first processor (11) is a network processor, the second processor (12) is a general purpose processor, and the third processor (13) is an artificial intelligence AI processor.

3. The network device according to claim 1 or 2, wherein the first processor (11) comprises a forwarding engine (111) and a measurement engine (112), and the forwarding engine (111) is electrically connected to the measurement engine (112), wherein
the forwarding engine (111) is configured to: receive the target data sent by the network interface (14), and forward the target data to the measurement engine (112); and
the measurement engine (112) is configured to: receive the target data sent by the forwarding engine (111), and determine the feature information of the target data.

4. The network device according to claim 3, wherein the first processor (11) further comprises a cache (113), wherein the cache (113) is electrically connected to the forwarding engine (111) and the measurement engine (112) separately; and
the cache (113) is configured to cache data generated by the forwarding engine (111) and the measurement engine (112).

5. The network device according to any one of claims 1 to 4, wherein the second processor (12) is further configured to obtain running status information of the network device; and
the second processor (12) is configured to perform preprocessing on the feature information of the target data and the running status information of the network device to obtain a preprocessing result.

6. The network device according to claim 5, wherein the network device further comprises an input/output IO interface (15), and the IO interface (15) is electrically connected to the second processor (12), wherein
the IO interface (15) is configured to: collect the running status information of the network device, and transmit the running status information to the second processor (12); and
the second processor (12) is configured to receive the running status information sent by the IO interface (15).

7. The network device according to any one of claims 1 to 6, wherein the network device is configured to transmit the target data in a network.

8. A data processing method, wherein the method is applied to a network device, and the method comprises:
receiving target data;
determining feature information of the target data;
performing preprocessing on the feature information of the target data to obtain a preprocessing result;
performing inference on the preprocessing result to obtain an inference result; and
performing policy analysis based on the inference result.

9. The method according to claim 8, wherein the determining feature information of the target data comprises:
obtaining a hash value corresponding to the target data, and reading a mapping table comprising a plurality of entries;
determining, from the plurality of entries comprised in the mapping table based on the hash value, a target entry corresponding to the target data; and
in response to that the target entry is determined, obtaining reference information of the target data, and determining the feature information based on the reference information of the target data and reference information stored in the target entry.

10. The method according to claim 9, wherein the determining feature information of the target data further comprises:
in response to that the target entry is not determined, adding a new entry corresponding to the target data to the mapping table; and
obtaining the reference information of the target data, storing the reference information in the new entry, and determining the feature information based on the reference information.

11. The method according to any one of claims 8 to 10, wherein after the determining feature information of the target data, the method further comprises:
in response to a need to aggregate the feature information, obtaining a rule group, wherein the rule group comprises one or more reference rules; and
aggregating the feature information according to the rule group to obtain one or more information groups; and
the performing preprocessing on the feature information to obtain a preprocessing result comprises:
performing preprocessing on the one or more information groups to obtain the preprocessing result.

12. The method according to any one of claims 8 to 11, wherein before the performing preprocessing on the feature information of the target data, the method further comprises:
obtaining running status information of the network device; and
the performing preprocessing on the feature information of the target data comprises:
performing preprocessing on the target data and the running status information of the network device.

13. The method according to any one of claims 8 to 12, wherein the determining feature information of the target data comprises: determining packet lengths and timestamps of a plurality of data packets in the target data;
the performing preprocessing on the feature information of the target data to obtain a preprocessing result comprises: obtaining a packet length sequence of the target data based on the packet lengths and the timestamps of the plurality of data packets, wherein a plurality of packet lengths in the packet length sequence correspond to one timestamp, and converting the packet length sequence into a matrix;
the performing inference on the preprocessing result to obtain an inference result comprises: identifying, based on the matrix, an application type to which the target data belongs; and
the performing policy analysis based on the inference result comprises: determining a forwarding priority of the target data based on the application type to which the target data belongs.

14. The method according to any one of claims 8 to 12, wherein the determining feature information of the target data comprises: determining the timestamps of the plurality of data packets in the target data and device identifiers of a plurality of network devices through which the data packets pass in a transmission process;
the performing preprocessing on the feature information of the target data to obtain a preprocessing result comprises: calculating, based on the timestamps of the plurality of data packets and the device identifiers of the plurality of network devices through which the data packets pass in the transmission process, time of the data packets pass through the plurality of network devices, and converting the time of the data packets pass through the plurality of network devices into a matrix;
the performing inference on the preprocessing result to obtain an inference result comprises: determining transmission congestion statuses of the plurality of network devices based on the matrix; and
the performing policy analysis based on the inference result comprises: determining a forwarding path of the target data based on the transmission congestion statuses of the plurality of network devices.

15. The method according to any one of claims 8 to 12, wherein the determining feature information of the target data comprises: determining packet lengths and timestamps of a plurality of data packets in the target data;
the performing preprocessing on the feature information of the target data to obtain a preprocessing result comprises: determining, based on the timestamps of the plurality of data packets, one or more data packets received by the network device in unit time, calculating a sum of one or more packet lengths of the data packets received by the network device in the unit time to obtain a throughput, and converting the throughput into a matrix;
the performing inference on the preprocessing result to obtain an inference result comprises: determining, based on the matrix, whether traffic of the network device is abnormal, to obtain a traffic monitoring result; and
the performing policy analysis based on the inference result comprises: determining a forwarding manner of the target data based on the traffic monitoring result.

16. A data processing apparatus, wherein the apparatus comprises:
a receiving module, configured to receive target data;
a determining module, configured to determine feature information of the target data;
a preprocessing module, configured to perform preprocessing on the feature information to obtain a preprocessing result;
an inference module, configured to perform inference on the preprocessing result to obtain an inference result; and
an analysis module, configured to perform policy analysis based on the inference result.

17. The apparatus according to claim 16, wherein the determining module is configured to: obtain a hash value corresponding to the target data, read a mapping table comprising a plurality of entries; determine, from the plurality of entries comprised in the mapping table based on the hash value, a target entry corresponding to the target data; and in response to that the target entry is determined, obtain reference information of the target data, and determine the feature information based on the reference information of the target data and reference information stored in the target entry.

18. The apparatus according to claim 16, wherein the determining module is further configured to: in response to that the target entry is not determined, add a new entry corresponding to the target data to the mapping table; and obtain the reference information of the target data, store the reference information in the new entry, and determine the feature information based on the reference information.

19. The apparatus according to any one of claims 16 to 18, wherein the apparatus further comprises: an aggregation module, configured to: in response to a need to aggregate the feature information, obtain a rule group, wherein the rule group comprises one or more reference rules; and aggregate the feature information according to the rule group to obtain one or more information groups; and
the preprocessing module is configured to perform preprocessing on the one or more information groups to obtain the preprocessing result.

20. The apparatus according to any one of claims 16 to 19, wherein the apparatus further comprises: an obtaining module, configured to obtain running status information of the network device; and the preprocessing module is configured to perform preprocessing on the target data and the running status information of the network device.

21. The apparatus according to any one of claims 16 to 20, wherein the determining module is configured to determine packet lengths and timestamps of a plurality of data packets in the target data;
the preprocessing module is configured to: obtain a packet length sequence of the target data based on the packet lengths and the timestamps of the plurality of data packets, wherein a plurality of packet lengths in the packet length sequence correspond to one timestamp, and convert the packet length sequence into a matrix;
the inference module is configured to identify, based on the matrix, an application type to which the target data belongs; and
the analysis module is configured to determine a forwarding priority of the target data based on the application type to which the target data belongs.

22. The apparatus according to any one of claims 16 to 20, wherein the determining module is configured to determine the timestamps of the plurality of data packets in the target data and device identifiers of a plurality of network devices through which the data packets pass in a transmission process;
the preprocessing module is configured to: calculate, based on the timestamps of the plurality of data packets and the device identifiers of the plurality of network devices through which the data packets pass in the transmission process, time of the data packets pass through the plurality of network devices, and convert the time of the data packets pass through the plurality of network devices into a matrix;
the inference module is configured to determine transmission congestion statuses of the plurality of network devices based on the matrix; and
the analysis module is configured to determine a forwarding path of the target data based on the transmission congestion statuses of the plurality of network devices.

23. The method according to any one of claims 16 to 20, wherein the determining module is configured to determine packet lengths and timestamps of a plurality of data packets in the target data;
the preprocessing module is configured to: determine, based on the timestamps of the plurality of data packets, one or more data packets received by the network device in unit time, calculating a sum of one or more packet lengths of the data packets received by the network device in the unit time to obtain a throughput, and convert the throughput into a matrix;
the inference module is configured to determine, based on the matrix, whether traffic of the network device is abnormal, to obtain a traffic monitoring result; and
the analysis module is configured to determine a forwarding manner of the target data based on the traffic monitoring result.

24. A data processing system, wherein the system comprises a plurality of the network devices according to any one of claims 1 to 7, first processors in the plurality of the network devices are connected to each other, second processors in the plurality of the network devices are connected to each other, and third processors in the plurality of the network devices are connected to each other.

25. The system according to claim 24, wherein different interconnected processors are configured to transmit a synchronization signal, the first processor is configured to determine feature information of target data based on the synchronization signal, the second processor is configured to perform preprocessing on the feature information based on the synchronization signal to obtain a preprocessing result, the third processor is configured to perform inference on the preprocessing result based on the synchronization signal to obtain an inference result, and the second processor is further configured to perform policy analysis based on the synchronization signal and the inference result.

26. The system according to claim 24, wherein there is a topological relationship between different network devices, the topological relationship indicates an upper/lower-level relationship between the different network devices, and different interconnected processors are configured to process a part of data in the target data in sequence based on the upper/lower-level relationship indicated by the topological relationship, and send a processing result to a processor in another upper-level network device, wherein the processing result is a result obtained through policy analysis.

27. A data processing system, wherein the system comprises a plurality of the network devices according to any one of claims 1 to 7, and the network devices are connected to each other.

28. The system according to claim 27, wherein each of the plurality of network devices is configured to: receive target data, and obtain an inference result based on the target data, wherein one of the plurality of network devices is configured to: summarize the inference result obtained by each of the network devices, and perform policy analysis based on a summarized inference result.

29. A computer-readable storage medium, wherein the storage medium stores at least one instruction, and a processor loads and executes the instruction to implement the data processing method according to any one of claims 8 to 15.
